# EUROPEAN PATENT APPLICATION

(11) **EP 3 928 917 A1**
(43) Date of publication of application: **29.12.2021**
(21) Application number: 20759598.4
(22) Date of filing: 13.02.2020
(51) Int. Cl.: B23K 35/30

(54) **WELDING MATERIAL FOR HIGH-CR FERRITIC HEAT-RESISTANT STEELS**

(30) Priority: 21.02.2019 JP 2019029843
(71) Applicant: KABUSHIKI KAISHA KOBE SEIKO SHO (KOBE STEEL, LTD.), Hyogo 651-8585 (JP)
(72) Inventor: MURANISHI Yoshimasa, Kanagawa 251-8551 (JP); OYAMADA Hiromi, Kanagawa 251-8551 (JP); TAKAUCHI Hideaki, Kanagawa 251-8551 (JP); MIYAMURA Takeo, Hyogo 651-2271 (JP); NAMBA Shigenobu, Hyogo 651-2271 (JP)
(74) Representative: Müller-Boré & Partner Patentanwälte PartG mbB
(86) International application number: PCT/JP2020/005528
(87) International publication number: WO 2020/170928

(57) **Abstract**

The present invention provides a welding material for high-Cr ferritic heat-resistant steels, which suppresses the occurrence of δ-ferrite that is a soft structure, thereby improving the toughness, and which enables the achievement of a welded metal that has good cracking resistance and strength at high temperatures. A welding material for high-Cr ferritic heat-resistant steels according to the present invention contains C, Si, Mn, S, Co, V, Nb, W, N and O, respectively within specific ranges and limits Ni and P respectively to specific ranges, while containing from 8.0% by mass to 9.5% by mass (inclusive) of Cr and from 0.02% by mass to 0.20% by mass (inclusive) of Mo and additionally limiting Cu to less than 0.05% by mass, with the balance being made up of Fe and unavoidable impurities.

## Description

### TECHNICAL FIELD

The present invention relates to a welding material suitable for welding high Cr ferrite heat resistant steel.

### BACKGROUND ART

Since boilers and turbines for power generation, and various heat resistant and pressure resistant steel pipes are used under high temperature and high pressure conditions, excellent high temperature strength, particularly excellent creep performance are required. High Cr ferrite heat resistant steel has been developed in response to such a demand, and many welding wires used for the high Cr ferrite heat resistant steel have already been proposed in each construction method.

For example, Patent Literature 1 discloses a welding wire that can obtain a weld metal having excellent high temperature creep strength (high temperature strength) and toughness, has excellent weldability, and can prevent generation of hot crack at the time of manufacturing a wire rod.

### CITATION LIST

### PATENT LITERATURE

Patent Literature 1: JP-A-2004-42116

### SUMMARY OF INVENTION

### TECHNICAL PROBLEM

However, in Patent Literature 1, although an appropriate amount of Cu is contained in order to prevent precipitation of ferrite that adversely affects toughness of a weld metal, crack resistance of the weld metal is reduced due to addition of Cu. Therefore, it is required to develop a welding material for high Cr ferrite heat resistant steel that can give a weld metal having good high temperature strength, toughness and crack resistance.

The present invention has been made in view of the above circumstances, and an object of the present invention is to provide a welding material for high Cr ferrite heat resistant steel that can prevent generation of δ ferrite, which is a soft structure, thereby improving toughness and can give a weld metal having good crack resistance and high temperature strength.

### SOLUTION TO PROBLEM

A welding material for high Cr ferrite heat resistant steel according to one aspect of the present invention contains:
C of 0.01 mass% or more and 0.15 mass% or less;
Si of 0.02 mass% or more and 0.90 mass% or less;
Mn of 0.20 mass% or more and 1.20 mass% or less;
S of 0.0005 mass% or more and 0.015 mass% or less;
Co of 0.50 mass% or more and 5.00 mass% or less;
Cr of 8.0 mass% or more and 9.5 mass% or less;
Mo of 0.02 mass% or more and 0.20 mass% or less;
V of 0.05 mass% or more and 0.90 mass% or less;
Nb of 0.005 mass% or more and 0.100 mass% or less;
W of 1.00 mass% or more and 5.00 mass% or less;
N of 0.02 mass% or more and 0.04 mass% or less;
O of 0.001 mass% or more and 0.015 mass% or less;
Cu of less than 0.05 mass%;
Ni of 1.20 mass% or less;
P of 0.015 mass% or less; and
a remainder being Fe and an unavoidable impurity.

A content of Ni is preferably 0.05 mass% or more and 1.20 mass% or less.

The welding material for high Cr ferrite heat resistant steel preferably further contains: B of 0.005 mass% or more and 0.015 mass% or less; Al of 0.015 mass% or less; and Ti of 0.015 mass% or less.

### ADVANTAGEOUS EFFECTS OF INVENTION

According to the present invention, it is possible to provide a welding material for high Cr ferrite heat resistant steel that can prevent generation of δ ferrite, which is a soft structure, thereby improving toughness and can give a weld metal having excellent cracking resistance and high temperature strength.

### DESCRIPTION OF EMBODIMENTS

Hereinafter, modes for carrying out the present invention (the present embodiment) are described in detail. It should be noted that the present invention is not limited to the embodiment described below, and can be optionally changed without departing from the scope of the present invention.

In general, in a weld metal obtained by welding high Cr ferrite heat resistant steel, δ ferrite, which is a soft structure, is likely to be generated, which reduces toughness of the weld metal, and therefore, it is effective to contain an element (for example, Cu) having an effect of preventing generation of δ ferrite in an appropriate content in a wire to improve the toughness of the weld metal.

However, the present inventors have focused on the fact that crack resistance of a weld metal is reduced due to addition of Cu, and as a result of earnest studies on a type and content of a metal component of the welding material, have found that a weld metal having good high temperature strength, toughness, and crack resistance can be obtained by appropriately adjusting contents of Mo and Cr, which are elements that generate δ ferrite having an influence on the reduction of the toughness, instead of reducing a content of Cu that contributes to improvement of the toughness but reduces crack resistance.

Hereinafter, a reason for adding components and a reason for limiting a composition of the welding material for high Cr ferrite heat resistant steel according to the present embodiment will be described in detail.

### [Composition of Welding Material for High Cr Ferrite Heat Resistance Steel]

The welding material for high Cr ferrite heat resistant steel according to the present embodiment may contain the following elements as essential components or may contain the following elements as optional components. When the welding material for high Cr ferrite heat resistant steel according to the present embodiment is used as a welding wire (solid wire), a content of each component described below means a content per total mass of the wire.

### <C: 0.01 mass% or more and 0.15 mass% or less>

C is an indispensable element for ensuring creep strength by being precipitated as carbide in the weld metal.

When a content of C is less than 0.01 mass%, the above effects cannot be sufficiently obtained. Therefore, the content of C in the welding material is 0.01 mass% or more, preferably 0.02 mass% or more, and more preferably 0.03 mass% or more.

On the other hand, since C is also an austenite-forming element, a Ac1 transformation point of the weld metal is lowered when the content of C exceeds 0.15 mass%, so that austenite transformation is generated during heat treatment after welding, and as a result, the creep strength is decreased and sensitivity to hot crack is also increased. Therefore, the content of C in the welding material is 0.15 mass% or less, preferably 0.13 mass% or less, and more preferably 0.11 mass% or less.

### <Si: 0.02 mass% or more and 0.90 mass% or less>

Si is an element that acts as a deoxidizing agent at the time of melting the weld metal, reduces a content of oxygen in the weld metal, and contributes to improvement of impact performance. Si also has an effect of reducing the interfacial tension of a molten metal at the time of melting the weld metal to reduce welding defects such as lack of fusion and overlap.

When a content of Si is less than 0.02 mass%, the above effects cannot be sufficiently obtained. Therefore, the content of Si in the welding material is 0.02 mass% or more, preferably 0.04 mass% or more, and more preferably 0.06 mass% or more.

On the other hand, since Si is a ferrite-forming element, ferrite remains in the weld metal, and the toughness of the weld metal is deteriorated when the content of Si exceeds 0.90 mass%. Therefore, the content of Si in the welding material is 0.90 mass% or less, preferably 0.70 mass% or less, and more preferably 0.40 mass% or less.

### <Mn: 0.20 mass% or more and 1.20 mass% or less>

Mn acts as a deoxidizing agent at the time of melting the weld metal, and is an indispensable element from the viewpoint of ensuring the strength and toughness of the weld metal.

When a content of Mn is less than 0.20 mass%, the above effects cannot be sufficiently obtained. Therefore, the content of Mn in the welding material is 0.20 mass% or more, preferably 0.30 mass% or more, and more preferably 0.40 mass% or more.

On the other hand, since Mn is an austenite-forming element, the Ac1 transformation point of the weld metal is decreased, and the creep strength is decreased when the content of Mn exceeds 1.20 mass%. Therefore, the content of Mn in the welding material is 1.20 mass% or less, preferably 1.00 mass% or less, and more preferably 0.80 mass% or less.

### <S: 0.0005 mass% or more and 0.015 mass% or less>

S is an element having an effect of reducing the interfacial tension of the molten metal at the time of melting the weld metal to prevent the generation of welding defects such as lack of fusion and undercut, and exhibits an effect of improving the weldability.

When a content of S is less than 0.0005 mass%, the above effects cannot be sufficiently obtained. Therefore, the content of S in the welding material is 0.0005 mass% or more, preferably 0.0007 mass% or more, and more preferably 0.001 mass% or more.

On the other hand, since S is an element that increases the sensitivity to the hot crack, the hot crack is generated in the weld metal when the content of S exceeds 0.015 mass%. Therefore, the content of S in the welding material is 0.015 mass% or less, preferably 0.012 mass% or less, and more preferably 0.008 mass% or less.

### <Co: 0.50 mass% or more and 5.00 mass% or less>

Co is an austenite-forming element, and has an effect of preventing generation of ferrite that adversely affects the toughness.

When a content of Co is less than 0.50 mass%, the above effect cannot be sufficiently obtained. Therefore, the content of Co in the welding material is 0.50 mass% or more, preferably 1.00 mass% or more, more preferably 1.50 mass% or more, still more preferably 2.00 mass% or more, particularly preferably 2.50 mass% or more.

On the other hand, when Co is excessively contained as in Ni, the Ac1 transformation point of the weld metal is decreased and the creep strength is decreased. Therefore, the content of Co in the welding material is 5.00 mass% or less, preferably 4.50 mass% or less, more preferably 4.00 mass% or less, and still more preferably 3.50 mass% or less.

### <Cr: 8.0 mass% or more and 9.5 mass% or less>

Cr is a main alloy element contained in the high Cr ferritic heat resistant steel to be used in the welding material according to the present embodiment. Cr is an indispensable element for ensuring oxidation resistance, erosion resistance, strength, and the like of the weld metal.

When a content of Cr is less than 8.0 mass%, the properties of the weld metal cannot be sufficiently ensured. Therefore, the content of Cr in the welding material is 8.0 mass% or more, preferably 8.1 mass% or more, and more preferably 8.2 mass% or more.

On the other hand, although Cr is a ferrite-forming element, as described above, in the present embodiment, since the content of Cu having the effect of preventing the generation of ferrite is reduced, it is necessary to limit the content of Cr to an appropriate amount to prevent the decrease in the toughness of the weld metal. When the content of Cr exceeds 9.5 mass%, ferrite is precipitated in the weld metal and the toughness is deteriorated. Therefore, the content of Cr in the welding material is 9.5 mass% or less, preferably 9.3 mass% or less, and more preferably 9.2 mass% or less.

### <Mo: 0.02 mass% or more and 0.20 mass% or less>

Mo is a solid-solution hardening element in steel, and has an effect of improving the strength of the weld metal by forming a solid solution in the weld metal.

When a content of Mo is less than 0.02 mass%, the above effects cannot be sufficiently obtained. Therefore, the content of Mo in the welding material is 0.02 mass% or more, preferably 0.03 mass% or more, and more preferably 0.04 mass% or more.

On the other hand, although Mo is an element that generates δ ferrite, as described above, in the present embodiment, since the content of Cu having the effect of preventing the generation of ferrite is reduced, it is necessary to limit the content of Mo to an appropriate amount to prevent a decrease in the toughness of the weld metal. When the content of Mo exceeds 0.20 mass%, ferrite is precipitated in the weld metal, and toughness is deteriorated. Therefore, the content of Mo in the welding material is 0.20 mass% or less, preferably 0.15 mass% or less, and more preferably 0.12 mass% or less.

### <V: 0.05 mass% or more and 0.90 mass% or less>

V is a precipitation hardening element in steel, and has an effect of improving the strength of the weld metal by being precipitated as carbonitride in the weld metal.

When a content of V is less than 0.05 mass%, the above effects cannot be sufficiently obtained. Therefore, the content of V in the welding material is 0.05 mass% or more, preferably 0.08 mass% or more, and more preferably 0.10 mass% or more.

On the other hand, when the content of V exceeds 0.90 mass%, the strength of the weld metal becomes too strong, and the toughness is deteriorated. Therefore, the content of V in the welding material is 0.90 mass% or less, preferably 0.75 mass% or less, more preferably 0.40 mass% or less, and still more preferably 0.30 mass% or less.

### <Nb: 0.005 mass% or more and 0.100 mass% or less>

Nb is a precipitation hardening element in steel, and has an effect of improving the strength of the weld metal by being precipitated as carbonitride in the weld metal.

When a content of Nb is less than 0.005 mass%, the effect of precipitation hardening cannot be sufficiently obtained. Therefore, the content of Nb in the welding material is 0.005 mass% or more, preferably 0.010 mass% or more, and more preferably 0.020 mass% or more.

On the other hand, when the content of Nb exceeds 0.100 mass%, the strength of the weld metal becomes too strong, and the toughness is deteriorated. Therefore, the content of Nb in the welding material is 0.100 mass% or less, preferably 0.09 mass% or less, more preferably 0.08 mass% or less, and still more preferably 0.07 mass% or less.

### <W: 1.00 mass% or more and 5.00 mass% or less>

W is a solid-solution hardening element in steel, and has an effect of improving the strength of the weld metal by forming a solid solution in the weld metal.

When a content of W is less than 1.00 mass%, the above effects cannot be sufficiently obtained. Therefore, the content of W in the welding material is 1.00 mass% or more, preferably 1.10 mass% or more, and more preferably 1.20 mass% or more.

On the other hand, since W is also a ferrite-forming element, ferrite is precipitated in the weld metal, and the toughness is deteriorated when W is contained in an amount of more than 5.00 mass%. Therefore, the content of W in the welding material is 5.00 mass% or less, preferably 4.20 mass% or less, and more preferably 3.60 mass% or less.

### <N: 0.02 mass% or more and 0.04 mass% or less>

N is an element that exhibits the effect of solid-solution hardening in steel and also contributes to improvement of the creep strength of the weld metal by binding to Nb and V to being precipitated as nitride. N is also an element that prevents the generation of δ ferrite. In the present embodiment, since the content of Cu is reduced in order to prevent a decrease in the crack resistance, it is effective to contain N having an effect of preventing the generation of δ ferrite, in a predetermined content or more in the welding material.

When a content of N is less than 0.02 mass%, the above effects cannot be sufficiently obtained. Therefore, the content of N in the welding material is 0.02 mass% or more, and preferably 0.021 mass% or more.

On the other hand, N is a strong austenite-forming element, the Ac1 transformation point of the weld metal is decreased, and the creep strength is decreased when the content of N exceeds 0.04 mass%. Therefore, the content of N in the welding material is 0.04 mass% or less, preferably 0.038 mass% or less, and more preferably 0.035 mass% or less.

### <O: 0.001 mass% or more and 0.015 mass% or less>

O is an element having an effect of reducing the interfacial tension of the molten metal at the time of melting the weld metal to prevent the generation of welding defects such as lack of fusion and overlap, and exhibits an effect of improving the weldability.

When the content of O is less than 0.001 mass%, the above effects cannot be sufficiently obtained. Therefore, the content of O in the welding material is 0.001 mass% or more, preferably 0.0015 mass% or more, and more preferably 0.0020 mass% or more.

On the other hand, when the content of O exceeds 0.015 mass%, the interfacial tension of the molten metal becomes too low, a bead appearance becomes poor, a large amount of deoxidized product is generated in the molten metal, and the deoxidized product remains in the weld metal to deteriorate the toughness thereof. Therefore, the content of O in the welding material is 0.015 mass% or less, preferably 0.014 mass% or less, more preferably 0.013 mass% or less, and particularly preferably 0.012 mass% or less.

### <Cu: less than 0.05 mass% (including 0 mass%)>

Cu is an austenite-forming element, and has an effect of preventing the generation of δ ferrite that adversely affects the toughness.

When a content of Cu is 0.05 mass% or more, the crack resistance of the weld metal is deteriorated, the Ac1 transformation point of the weld metal is decreased, and the creep strength is decreased. In the present embodiment, since the contents of Mo and Cr that promote the generation of δ ferrite are appropriately adjusted, the crack resistance of the weld metal can be improved while preventing a decrease in the toughness even when the content of Cu is reduced. Therefore, the content of Cu in the welding material is less than 0.05 mass%, preferably 0.04 mass% or less, and more preferably 0.03 mass% or less.

### <Ni: 1.20 mass% or less (including 0 mass%)>

Ni is an austenite-forming element, and has an effect of preventing generation of ferrite that adversely affects the toughness.

When a content of Ni exceeds 1.20 mass%, the Ac1 transformation point of the weld metal is decreased, and the creep strength is decreased. In the present embodiment, since the contents of Mo and Cr that promote the generation of δ ferrite are adjusted, desired toughness of the weld metal can be sufficiently secured even when a predetermined content or more of Ni is not contained in the welding material. Therefore, the content of Ni in the welding material is 1.20 mass% or less, preferably 1.00 mass% or less, and more preferably 0.90 mass% or less.

In order to further increase the toughness of the weld metal, the content of Ni in the welding material is preferably 0.05 mass% or more.

### <P: 0.015 mass% or less (including 0 mass%)>

P is an element that increases the hot crack, and is particularly likely to cause crack in a solidification temperature range such as in a process of forming the weld metal and at a temperature immediately below the solidification temperature range, and therefore, it is necessary to limit a content of P. In the present embodiment, since S that increases the sensitivity to the hot crack is positively added similarly to P, it is also necessary to consider this point. Therefore, a content of P in the welding material is 0.015 mass% or less, preferably 0.010 mass% or less, and more preferably 0.008 mass% or less.

### <B: 0.005 mass% or more and 0.015 mass% or less>

The welding material according to the present embodiment preferably further contains B of 0.005 mass% or more and 0.015 mass% or less as an optional component.

Since B prevents coarsening of carbides at grain boundaries in steel, the creep strength of the weld metal can be further improved when B is contained.

When a content of B is 0.005 mass% or more, the above effects can be effectively obtained. Therefore, B in the welding material is preferably 0.005 mass% or more, and more preferably 0.006 mass% or more.

On the other hand, when the content of B is 0.015 mass% or less, the strength of the weld metal becomes too strong, and thus the toughness can be effectively prevented from being lowered. Therefore, when B is contained in the welding material, the content of B is 0.015 mass% or less, preferably 0.013 mass% or less, and more preferably 0.012 mass%.

### <Al: 0.015 mass% or less (including 0 mass%)>

When the welding material according to the present embodiment further contains Al as an optional component, a content of Al is preferably controlled to 0.015 mass% or less.

Al is an element that acts as a strong deoxidizing agent when the weld metal is melted.

When the content of Al is 0.015 mass% or less, it is possible to effectively prevent a decrease in the toughness due to excessive deoxidation and excessive strength of the weld metal. Therefore, the content of Al in the welding material is 0.015 mass% or less, preferably 0.010 mass% or less, and more preferably 0.008 mass% or less.

### <Ti: 0.015 mass% or less (including 0 mass%)>

When the welding material according to the present embodiment further contains Ti as an optional component, a content of Ti is preferably controlled to 0.015 mass% or less.

Ti is a ferrite-forming element, and precipitates ferrite, which adversely affects the toughness, in the weld metal. Further, Ti is a strong carbide-forming element similar to Nb and V, and bonds with C to form needle-like carbides, which are precipitated in the weld metal. Since carbides in this form significantly reduce the toughness of the weld metal, it is effective to limit a content of Ti, specifically, to set the content of Ti to 0.015 mass% or less. Therefore, the content of Ti in the welding material is 0.015 mass% or less, preferably 0.010 mass% or less, and more preferably 0.008 mass% or less.

### <Remainder>

A remainder of the welding material according to the present embodiment is Fe and an unavoidable impurity. Examples of the unavoidable impurity include Li, Mg, and Zr.

In the welding material according to the present embodiment, a content of Fe is preferably 75 mass% or more, and more preferably 78 mass% or more with respect to a total mass of the welding material.

### [Welding Material]

The welding material for high Cr ferrite heat resistant steel according to the present embodiment can be processed into, for example, a welding rod, a filler wire for gas tungsten arc welding, a core wire of a welding rod for coated arc welding, and the like by a known manufacturing method. The welding material according to the present embodiment can be used in any of TIG welding, MAG welding, and submerged arc welding in the case of welding high Cr ferritic heat resistant steel.

When welding is performed using the welding material according to the present embodiment, the effects of the present embodiment described above can be obtained as long as the content of each component in the obtained weld metal is within the range of the content of each element in the welding material according to the present embodiment.

### Example

Hereinafter, the present invention is described in more detail with reference to Invention Examples and Comparative Examples, but the present invention is not limited thereto.

### [Production of Wire]

A steel ingot having a component composition shown in Table 1 below (remainder being Fe and an unavoidable impurity) were melted and subjected to hot rolling and cold wire drawing to produce a welding wire having a diameter of 1.6 mm. A content of each chemical component shown in Table 1 is a content (mass%) based on a total mass of the wire.

### [Welding]

Next, using the above welding wire, buttering was performed on a mild steel sheet, and after groove processing, an inside of a groove was subjected to automatic gas tungsten arc welding (GTAW). Thereafter, a post weld heat treatment (PWHT) was performed at a temperature of 740°C to 760°C. The welding conditions are shown below.

### (Welding Conditions)

Plate thickness of base metal: 12 mm
Groove angle, shape: 45°, V shape
Route interval: 6.5 mm
Wire diameter: 1.6 mm
Current: 220A to 240A/230A
Voltage: 10V to 12V/11V
Travel speed: 8 cm/min to 10 cm/min
Gas type, flow rate: 100% Ar, 25 liters/min
Wire feeding amount: 8 g/min
Preheating and inter-pass temperature: 250°C to 300°C
Laminating method: 6 to 7 layers 9 to 13 passes

### [Evaluation]

Further, the following various tests were performed on the weld metal after PWHT at a temperature and time shown in Table 2 below, and high temperature strength, toughness, and crack resistance of the weld metal were evaluated, and a metal structure was observed. The evaluation results of the various tests are also shown in Table 2 below.

### <High Temperature Strength>

The weld metal after PWHT was subjected to a high temperature tensile test at 650°C in accordance with JIS Z3111 to measure 0.2% yield strength (0.2% YS). A sample having an obtained value of 280 MPa or more was evaluated as A (excellent), a sample having an obtained value of 250 MPa or more and less than 280 MPa was evaluated as B (good), and a sample having an obtained value of less than 250 MPa was evaluated as C (poor).

### <Toughness>

The weld metal after PWHT was subjected to a Charpy impact test at 20°C in accordance with JIS Z2242 to measure an absorbed energy vE (J) and evaluate the toughness. A sample having an absorbed energy of 60J or more obtained by the measurement was evaluated as A (excellent), a sample having an absorbed energy of 27J or more and less than 60J obtained by the measurement was evaluated as B (good), and a sample having an absorbed energy of less than 27J obtained by the measurement was evaluated as C (poor).

### <Crack Resistance>

The weld metal after PWHT was evaluated for the crack resistance by checking the presence or absence of a crack by microstructure observation. It should be noted that a sample having no crack was determined to be acceptable by the microstructure observation.

### <Metal Structure>

With respect to the weld metal after PWHT, soundness of a metal structure was evaluated by measuring an area ratio of δ ferrite in an as-cast zone of a final pass in the microstructure observation. When the area ratio of the δ ferrite was less than 2%, it was determined that the δ ferrite was not present, and the sample was regarded as acceptable. On the other hand, when the area ratio of the δ ferrite was 2% or more, it was determined that the δ ferrite was present, and the sample was regarded as unacceptable.

**[Table 1]**

| | Chemical composition of wire (mass%) | | | | | | | | | | | | | | | | | |
|---|---|---|---|---|---|---|---|---|---|---|---|---|---|---|---|---|---|---|
| | C | Si | Mn | S | Co | Cr | Mo | V | Nb | W | N | O | Cu | Ni | P | B | Al | Ti |
| Invention Example 1 | 0.08 | 0.31 | 0.53 | 0.0027 | 3.02 | 8.9 | 0.11 | 0.19 | 0.054 | 2.87 | 0.02 | 0.003 | < 0.01 | < 0.01 | 0.004 | 0.011 | 0.002 | < 0.002 |
| Invention Example 2 | 0.07 | 0.31 | 0.53 | 0.0026 | 3.01 | 8.8 | 0.10 | 0.18 | 0.054 | 2.78 | 0.02 | 0.003 | < 0.01 | 0.81 | 0.003 | 0.009 | < 0.002 | < 0.002 |
| Invention Example 3 | 0.08 | 0.30 | 0.53 | 0.0025 | 3.01 | 8.8 | 0.04 | 0.20 | 0.056 | 2.91 | 0.03 | 0.005 | < 0.01 | < 0.01 | 0.003 | 0.010 | 0.004 | 0.003 |
| Invention Example 4 | 0.08 | 0.11 | 0.54 | 0.0025 | 3.05 | 9.0 | 0.04 | 0.19 | 0.058 | 2.92 | 0.03 | 0.005 | < 0.01 | < 0.01 | 0.003 | 0.010 | < 0.002 | < 0.002 |
| Invention Example 5 | 0.08 | 0.30 | 0.56 | 0.0027 | 2.98 | 8.8 | 0.05 | 0.20 | 0.064 | 2.90 | 0.02 | 0.006 | < 0.01 | 0.50 | 0.003 | 0.010 | 0.003 | < 0.002 |
| Invention Example 6 | 0.08 | 0.31 | 0.54 | 0.0026 | 3.02 | 8.8 | 0.04 | 0.20 | 0.062 | 2.93 | 0.02 | 0.006 | < 0.01 | 0.51 | 0.003 | 0.007 | 0.002 | < 0.002 |
| Comparative Example 1 | 0.09 | 0.29 | 0.58 | 0.0037 | 2.93 | 8.8 | < 0.005 | 0.18 | 0.056 | 2.84 | 0.003 | 0.005 | < 0.01 | < 0.01 | 0.002 | 0.011 | < 0.002 | 0.002 |
| Comparative Example 2 | 0.09 | 0.29 | 0.53 | 0.0030 | 2.95 | 8.9 | < 0.005 | 0.18 | 0.055 | 2.84 | 0.003 | 0.004 | < 0.01 | < 0.01 | 0.002 | 0.019 | < 0.002 | 0.003 |
| Comparative Example 3 | 0.09 | 0.29 | 0.52 | 0.0026 | 2.96 | 8.8 | < 0.005 | 0.18 | 0.056 | 2.83 | 0.003 | 0.004 | < 0.01 | < 0.01 | 0.003 | 0.0003 | < 0.002 | < 0.002 |
| Comparative Example 4 | 0.10 | 0.27 | 0.52 | 0.0024 | 2.96 | 8.8 | < 0.005 | 0.19 | 0.052 | 2.79 | 0.003 | 0.003 | < 0.01 | 0.83 | 0.004 | 0.011 | < 0.002 | 0.002 |
| Comparative Example 5 | 0.08 | 0.31 | 0.53 | 0.0027 | 3.03 | 8.8 | 0.50 | 0.19 | 0.054 | 2.80 | 0.02 | 0.003 | < 0.01 | < 0.01 | 0.003 | 0.010 | < 0.002 | < 0.002 |
| Comparative Example 6 | 0.08 | 0.31 | 0.52 | 0.0027 | 3.02 | 8.8 | 0.99 | 0.19 | 0.055 | 2.84 | 0.02 | 0.003 | < 0.01 | < 0.01 | 0.003 | 0.011 | < 0.002 | < 0.002 |
| Comparative Example 7 | 0.08 | 0.31 | 0.53 | 0.0027 | 3.06 | 8.9 | 1.00 | 0.19 | 0.055 | 1.98 | 0.02 | 0.003 | < 0.01 | < 0.01 | 0.003 | 0.010 | < 0.002 | < 0.002 |

**[Table 2]**

| | PWHT temperature (°C) | PWHT time (h) | High Temperature Strength | Toughness | Crack Resistance | Metal Structure |
|---|---|---|---|---|---|---|
| | | | 0.2% yield strength (MPa) at 650°C | Absorbed energy vE (J) at 20°C | Presence or absence of crack | Presence or absence of δ ferrite |
| Invention Example 1 | 740 | 4.13 | A | B | No | No |
| Invention Example 2 | 740 | 4.13 | A | A | No | No |
| Invention Example 3 | 760 | 4.15 | A | A | No | No |
| Invention Example 4 | 760 | 4.10 | B | A | No | No |
| Invention Example 5 | 760 | 4.15 | B | B | No | No |
| Invention Example 6 | 760 | 4.15 | B | A | No | No |
| Comparative Example 1 | 740 | 4.00 | C | A | No | No |
| Comparative Example 2 | 740 | 4.00 | B | C | No | No |
| Comparative Example 3 | 740 | 4.00 | C | A | No | No |
| Comparative Example 4 | 740 | 4.00 | C | A | No | No |
| Comparative Example 5 | 740 | 4.13 | A | C | Yes | Yes |
| Comparative Example 6 | 740 | 4.13 | A | C | Yes | Yes |
| Comparative Example 7 | 740 | 4.13 | A | C | Yes | Yes |

As shown in Tables 1 and 2, in Invention Examples 1 to 6, since the contents of all chemical components in the welding material (wire) were within the range of the present invention, as a result of welding using these wires, the generation of δ ferrite was prevented, and a weld metal having excellent toughness, crack resistance, and high temperature strength could be obtained.

On the other hand, in Comparative Examples 1, 3, and 4, since a content of Mo and a content of N in the wire were less than lower limits of ranges of the present invention, the high temperature strength was reduced as compared with Invention Examples.

In Comparative Example 2, the content of Mo and the content of N in the wire were less than the lower limits of the ranges of the present invention, and a content of B for improving the high temperature strength exceeded an upper limit of the preferred range of the present invention, so that the reduction in high temperature strength was prevented, but the toughness was reduced.

Further, in Comparative Examples 5 to 7, since the content of Mo in the wire exceeded the upper limit of the range of the present invention, δ ferrite was precipitated in the weld metal, the toughness was deteriorated, and the crack resistance was deteriorated.

As described above in detail, according to the present invention, it is possible to provide a welding material for high Cr ferrite heat resistant steel that can prevent the generation of δ ferrite, which is a soft structure, thereby improving toughness and obtaining a weld metal having good crack resistance and high temperature strength.

Although the embodiments are described above with reference to the drawings, it is needless to say that the present invention is not limited to such examples. It will be apparent to those skilled in the art that various changes and modifications may be conceived within the scope of the claims. It is also understood that the various changes and modifications belong to the technical scope of the present invention. Constituent elements in the embodiments described above may be combined freely within a range not departing from the spirit of the present invention.

It should be noted that the present application is based on a Japanese patent application (Japanese Patent Application No. 2019-029843) filed on February 21, 2019, and the contents thereof are incorporated herein by reference.

## Claims

1. A welding material for high Cr ferrite heat resistant steel comprising:
C of 0.01 mass% or more and 0.15 mass% or less;
Si of 0.02 mass% or more and 0.90 mass% or less;
Mn of 0.20 mass% or more and 1.20 mass% or less;
S of 0.0005 mass% or more and 0.015 mass% or less;
Co of 0.50 mass% or more and 5.00 mass% or less;
Cr of 8.0 mass% or more and 9.5 mass% or less;
Mo of 0.02 mass% or more and 0.20 mass% or less;
V of 0.05 mass% or more and 0.90 mass% or less;
Nb of 0.005 mass% or more and 0.100 mass% or less;
W of 1.00 mass% or more and 5.00 mass% or less;
N of 0.02 mass% or more and 0.04 mass% or less;
O of 0.001 mass% or more and 0.015 mass% or less;
Cu of less than 0.05 mass%; Ni of 1.20 mass% or less;
P of 0.015 mass% or less; and
a remainder being Fe and an unavoidable impurity.

2. The welding material for high Cr ferrite heat resistant steel according to claim 1, wherein a content of Ni is 0.05 mass% or more and 1.20 mass% or less.

3. The welding material for high Cr ferrite heat resistant steel according to claim 1 or 2, further comprising:
B of 0.005 mass% or more and 0.015 mass% or less;
Al of 0.015 mass% or less; and
Ti of 0.015 mass% or less.
